# FASCICULE DE BREVET EUROPEEN

(11) **EP 3 194 143 B1**
(45) Date de publication et mention de la délivrance du brevet: **22.04.2020**
(21) Numéro de dépôt: 15778364.8
(22) Date de dépôt: 18.09.2015
(51) Int. Cl.: B29C 51/42, B29C 51/02, B29C 51/14, B29C 35/08, B29C 35/16, B29B 13/02

(54) **PROCÉDÉ DE MISE EN FORME À CHAUD D'UN MATÉRIAU THERMOPLASTIQUE ET INSTALLATION DE MISE EN OEUVRE**
VERFAHREN ZUM ERWÄRMEN EINES THERMOPLASTISCHEN GEGENSTANDS UND VORRICHTUNG DAFÜR
METHOD OF HEATING A THERMOPLASTIC OBJECT AND APPARATUS THEREFORE

(30) Priorité: 18.09.2014 FR 1458839
(43) Date de publication de la demande: 26.07.2017
(73) Titulaire: Centre Technique Des Industries Mecaniques, 60300 Senlis (FR)
(72) Inventeur: CALLENS, Clément, F-44850 Ligné (FR); LAGOUTTE, Alain, F-71390 Montagny-Lès-Buxy (FR); CAPON, Philippe, F-71100 Châlon-sur-Saône (FR); DREANO, Elise, F-44100 Nantes (FR); CURTHELEY, Karim, F-71390 Sainte-Hélène (FR)
(74) Mandataire: Fédit-Loriot
(86) Numéro de dépôt international: PCT/FR2015/052510
(87) Numéro de publication internationale: WO 2016/042276

(56) Documents cités:
- EP-A1- 0 452 867
- EP-A2- 0 157 403
- EP-A2- 0 336 120
- WO-A1-03/043799

## Description

La présente invention se rapporte à un procédé de mise en forme de préforme en matériau thermoplastique et à une installation pour le mettre en œuvre.

Des procédés de mise en forme de préformes en matériau polymère thermoplastique, communément dénommés thermoformage, permettent de réaliser des pièces en trois dimensions. Ainsi, on fournit tout d'abord une plaque d'un matériau thermoplastique que l'on rend ductile grâce à des organes de chauffage de type infrarouge. Puis ensuite, on transfère la plaque ductile à l'intérieur d'un moule de formage installé dans une presse et adapté pour pouvoir façonner la pièce en 3 dimensions en déformant la plaque ductile. Enfin, on refroidit la pièce moulée afin que le matériau polymère thermoplastique retrouve sa rigidité, puis on éjecte la pièce du moule de formage.

Les organes de chauffage sont installés dans une enceinte et le moule de formage est situé en aval de l'enceinte afin de pouvoir transférer séquentiellement les plaques ductiles de l'enceinte vers le moule de formage en minimisant les pertes énergétiques.

WO03043799A1 divulgue un procédé et une installation selon les preambules des revendications 1 et 5.

Afin de diminuer le coût de revient de chacune des pièces formées, il est nécessaire de diminuer les temps de fabrication de ces pièces. Aussi, l'étape limitante dans la séquence des transformations est celle du ramollissement du matériau thermoplastique. Aussi, on est poussé à augmenter la puissance des organes de chauffage afin de, précisément, diminuer le temps de cette étape de ramollissement du matériau pour obtenir une plaque ductile. Le risque dans ce cas, est de favoriser l'oxydation de la surface du matériau et partant, de dégrader l'aspect esthétique de cette surface, et à l'extrême, de la brûler. Au surplus, le matériau risque de perdre certaines de ses caractéristiques, notamment mécaniques, mais aussi de tenue due à la perte de ses adjuvants.

Aussi, un problème qui se pose et que vise à résoudre la présente invention est de fournir un procédé de mise en forme qui permette de diminuer les temps de cycle de fabrication de pièces thermoformées sans pour autant dégrader le matériau thermoplastique dans lequel elles sont façonnées.

Dans ce but, et selon un premier aspect, la présente invention propose un procédé selon la revendication 1.

Ainsi, une caractéristique de l'invention réside dans la mise en œuvre d'un fluide gazeux, par exemple de l'air, que l'on projette sous la forme d'un flux homogène contre la surface de la préforme durant le chauffage du matériau. On fournit ainsi davantage de puissance thermique tout en limitant la montée en température de la surface. De la sorte, et de façon surprenante, il est possible de chauffer le matériau thermoplastique jusqu'à sa température de fusion sans pour autant oxyder sa surface ni la brûler. Partant, le temps de montée en température de la préforme à cœur, est réduit de manière substantielle. Il est par exemple réduit de 50 % dans des conditions où la préforme est relativement épaisse. Au surplus, l'état de surface du matériau ne présente pas de dégradation ni de signes d'oxydation rédhibitoires. Le temps de montée en température de la préforme étant réduit, le temps de cycle complet du formage est réduit d'autant, et partant, le coût de fabrication des pièces en est réduit également.

On entend par matériau composite thermoplastique, un matériau comprenant une matrice faite d'un polymère thermoplastique et d'un élément de renfort, par exemple des couches d'un matériau textile. Le polymère thermoplastique est par exemple un polyamide ou un matériau plus rigide par exemple le poly-ether-ether-cetone. Le matériau textile, est par exemple fait d'un textile tissé en fibre de verre ou de carbone. De la sorte, le matériau composite présente une résistance à la déformation sous contrainte, supérieure à celle d'un matériau thermoplastique exempt de matériau de renfort.

Selon l'invention entre l'étape a) et l'étape b), on fournit en outre de l'énergie thermique à ladite préforme par conduction, de manière à préchauffer ladite préforme. Ainsi, grâce a cette étape de préchauffage par conduction, en amont de l'étape de chauffage par rayonnement, on apporte déjà une quantité substantielle d'énergie thermique à la préforme, sans dégrader sa surface. La préforme atteint ainsi une température sensiblement inférieure à sa température de fusion, de manière à ce que sa surface ne soit pas rendue collante. De la sorte, en combinant les deux modes d'apport énergétique, par conduction et par rayonnement, on diminue plus encore les temps de cycle de fabrication de la pièce. Aussi, on diminue non seulement les temps de cycle, et par conséquent la productivité, mais au surplus, on diminue la quantité totale d'énergie nécessaire à la mise en forme de la préforme.

Avantageusement, on projette ledit fluide gazeux selon une direction sensiblement perpendiculaire à la surface de ladite préforme. Une telle orientation, permet un meilleur échange thermique à la surface de la préforme, et partant, permet de la mieux préserver.

En outre, de manière préférentielle, on met en contact ladite préforme avec des plaques chauffées pour fournir de l'énergie thermique par conduction à ladite préforme. Grâce à la mise en contact de la préforme avec les plaques chauffées, les possibilités d'oxydation de la surface du matériau diminuent, puisque la quantité d'air, et partant la quantité d'oxygène, est faible à l'interface. Aussi, l'énergie thermique se propage elle-même plus rapidement par conduction à l'intérieur du matériau pour rejoindre le cœur de la préforme.

Au surplus, et selon une variante de réalisation particulièrement avantageuse, à l'étape b), on fournit de l'énergie thermique par rayonnement infrarouge. On entend par rayonnement infrarouge, un rayonnement électromagnétique dont la longueur d'onde est située dans le domaine des longueurs d'onde de l'infrarouge, entre celles correspondant à la lumière visible et celles des micro-ondes. De la sorte, on vient chauffer rapidement et aisément la préforme. Préférentiellement, le rayonnement infrarouge émet dans le domaine des courtes longueurs d'onde, et de faible inertie.

Préférentiellement, à l'étape b), ledit fluide gazeux est de l'air. L'air est en effet intéressant en ce qu'il est d'un coût avantageux. Ainsi qu'on l'expliquera ci-après, dans certaines circonstances, un fluide gazeux inerte est requis pour atténuer plus encore le phénomène d'oxydation de la surface de la préforme en matériau polymère.

Selon un autre aspect, la présente invention concerne une installation selon la revendication 5.

Une telle installation de mise en œuvre du procédé tel que décrit ci-dessus, en procure des avantages identiques. De préférence, le dispositif de projection du fluide gazeux est orienté dans une direction sensiblement perpendiculaire à la surface de la préforme. On obtient ainsi un écoulement du fluide gazeux de type turbulent à la surface de la préforme, ce qui permet de préserver plus encore la surface.

L'installation comprend un dispositif de chauffage par conduction situé en amont de ladite enceinte de chauffage par rayonnement pour pouvoir fournir de l'énergie thermique à ladite préforme par conduction.

Ledit dispositif de chauffage par conduction comprend des plaques chauffées destinées à venir en contact avec ladite préforme pour fournir de l'énergie thermique par conduction à ladite préforme. Ainsi, les plaques chauffées sont mobiles l'une par rapport à l'autre entre une position écartée l'une de l'autre pour pouvoir recevoir la préforme en matériau thermoplastique et une position rapprochée l'une de l'autre où elles viennent s'appliquer en contact contre la préforme. Selon la invention, la préforme est prise entre les plaques chauffées, dans un espace avec une présence d'air limitée, voire un espace confiné si nécessaire, privé d'air au moyen d'un tirage sous vide.

De plus, ladite enceinte de chauffage par rayonnement comprend des lampes à émission infrarouge.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1A est une vue schématique d'un premier poste d'une installation de mise en forme d'une préforme en matériau composite conforme à l'invention ;
- la Figure 1B est une vue schématique d'un deuxième poste de l'installation succédant au premier représenté sur la Figure 1A ;
- la Figure 1C est une vue schématique d'un troisième poste de l'installation succédant au deuxième représenté sur la Figure 1B; et,
- la Figure 2 est une vue schématique illustrant des phénomènes observés au deuxième poste de l'installation représenté sur la Figure 1B.

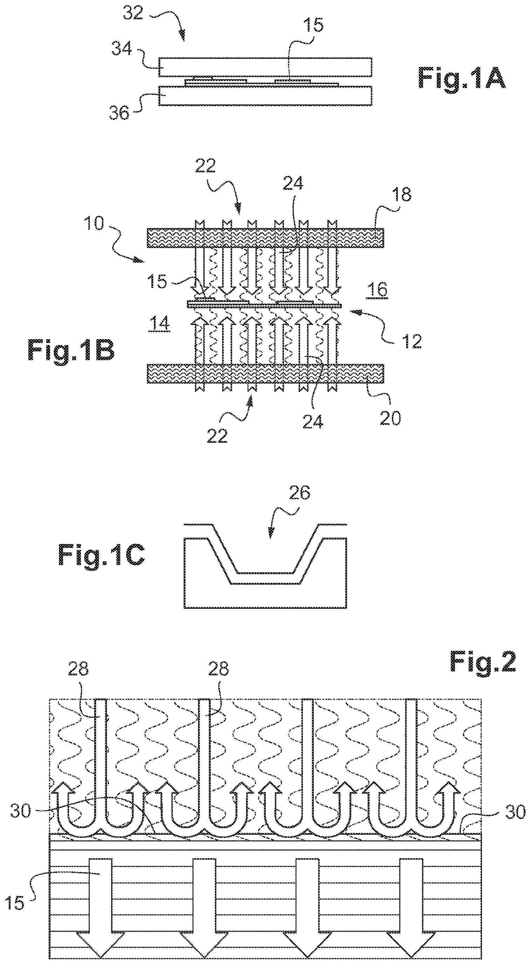

Les Figures 1A, 1B et 1C illustrent 3 postes de traitement successifs d'une préforme en matériau thermoplastique.

On se référera tout d'abord à la Figure 1B montrant schématiquement une enceinte de chauffage 10, laquelle constitue un poste de traitement essentiel du procédé selon l'invention. Elle comprend un espace de traitement 12, lequel présente une entrée 14 et une sortie 16 opposée. À l'intérieur de l'espace de traitement 12, une préforme en composite thermoplastique 15 est maintenue horizontalement en position fixe. La préforme 15 présente ici des parties de différentes épaisseurs. L'enceinte de chauffage 10 présente, dans sa partie supérieure, des radians infrarouges supérieurs 18, surmontant l'espace de traitement 12 et orientés vers ce dernier. Elle présente également dans sa partie inférieure, en dessous de l'espace de traitement 12, des radians infrarouges inférieurs 20 également orientés vers celui-ci. En outre, l'enceinte de chauffage 10 comporte un dispositif de projection d'un fluide gazeux 22 permettant de projeter le fluide gazeux à travers les radians infrarouges 18, 20 vers l'intérieur de l'espace de traitement 12 en direction de la préforme 15. Le dispositif de projection 22 comporte par exemple, des buses d'injection 24 s'étendant entre les éléments des radians infrarouges 20, 18. En l'espèce, le fluide gazeux projeté à travers le dispositif 22 est de l'air.

En aval de l'enceinte de chauffage 10, est représenté schématiquement sur la Figure 1C un moule de formage 26 destiné à recevoir la préforme en composite thermoplastique 15 ainsi qu'on l'expliquera ci-après.

Ainsi, la préforme 15 en composite thermoplastique présente par exemple une matrice en polyamide 6, ou en polyamide 6,6, et des couches de renfort textile par exemple en fibre de verre ou en fibre de carbone. La préforme 15 se présente sous la forme générale d'une plaque, ou d'une préforme nappée multi-épaisseur, non consolidée, et elle est maintenue en position fixe à l'intérieur de l'espace de traitement 12 sur une plate-forme ajourée et non représentée. Une préforme multi-épaisseur, présente des zones de différentes épaisseurs.

De la sorte, les radians infrarouges 18, 20 fournissent de l'énergie thermique par rayonnement à la préforme 15 sur ses deux faces opposées.

Comme illustré plus en détail sur la Figure 2, le rayonnement pénètre à travers la surface 30 de la préforme 15, dans ses couches superficielles, sur une épaisseur de l'ordre de quelques micromètres, ou plus, et ensuite l'énergie thermique se transmet par conduction à l'intérieur de la préforme 15 pour atteindre le cœur du matériau.

L'intensité des radians infrarouges 18, 20 est ajustée de manière à pouvoir porter la température du matériau de la préforme 15 sensiblement au-delà de sa température de fusion. Simultanément, l'air est injecté à travers les éléments de radians infrarouges 20, 18 selon un flux 28 orienté sensiblement perpendiculairement à la surface 30 de la préforme 15. Pour ce faire, l'installation conforme à l'invention comprend des buses d'injection d'air situées entre les radians. Ces buses d'injection d'air sont orientées vers la préforme 15, et elles sont alimentées grâce a un réseau d'air comprimé par exemple.

L'air projeté est initialement à la température ambiante, et il permet de venir refroidir la surface 30 de la préforme 15 composite de façon à réduire l'oxydation du matériau, sans entraver l'action du rayonnement infrarouge au travers de la couche de surface. Selon une variante de réalisation de l'invention, on projette non pas de l'air ambiant, mais un gaz neutre du type azote, de manière à chasser l'air et partant, éliminer la présence d'oxygène à la surface 30 de la préforme 15. De la sorte, on réduit plus encore les possibilités d'oxydation du matériau.

Ainsi, grâce à la puissance des radians infrarouges 18, 20, permettant de transmettre le maximum d'énergie thermique possible au matériau composite, et à l'action de l'air projeté qui permet de préserver la surface 30 de la préforme 15, on vient ramollir le matériau thermoplastique et le rendre ductile dans des temps très courts sans altérer sa surface.

Avantageusement, dans le cas d'une préforme multi-épaisseur, on régule l'intensité des radians infrarouges 18, 20 en venant mesurer la température de surface 30 de la préforme 15 sur la zone de plus faible épaisseur. De la sorte, on peut chauffer le matériau thermoplastique jusqu'à sa température de fusion sans le dégrader. Ainsi, on peut diminuer d'environ 50 % les temps de chauffage par rapport aux solutions selon l'art antérieur et on peut traiter des composites présentant différentes épaisseurs et en particulier des grandes épaisseurs.

Après que le matériau de la préforme 15 a été porté à une température supérieure à sa température de fusion, et ce de manière homogène, celle-ci est extraite de l'enceinte de chauffage 10 à travers la sortie 16 pour pouvoir être introduite directement à l'intérieur du moule de formage 26. La préforme 15 est alors mise en forme puis refroidie selon un mode de mise en œuvre bien connu, pour fournir une pièce en composite rigide.

Selon un mode de mise en œuvre de l'invention particulièrement avantageux, la préforme 15 est préchauffée par conduction avant d'être introduite à l'intérieur de l'enceinte de chauffage 10. Ainsi, l'installation conforme à l'invention comprend, en amont de l'enceinte de chauffage 10, tel que représenté sur la Figure 1A, un dispositif de chauffage par conduction 32. Ce dernier comprend deux plaques chauffantes 34, 36 parallèles et mobiles entre une position écartée l'une de l'autre et une position rapprochée l'une de l'autre dans laquelle elles prennent en sandwich la préforme 15 multi-épaisseur. Les plaques chauffantes 34, 36, sont réalisées en métal et sont par exemple équipées de résistances électriques. En outre, elles peuvent elle-même être préformées pour venir épouser l'entière surface de la préforme 15 et la préchauffer de manière homogène.

Dans cette phase de préchauffage par conduction de la préforme 15, on vient apporter une grande quantité d'énergie thermique à cœur du matériau, et en particulier lorsque la préforme présente une grande épaisseur, notamment avec des plis non consolidés. En effet, on favorise la conduction en limitant les lames d'air entre plis, grâce à la légère pression des plaques chauffantes 34, 36. Celles-ci sont bien évidemment portées à une température inférieure à la température de fusion du matériau thermoplastique. Cela permet non seulement d'éviter l'adhésion, entre les plaques 34, 36 et le matériau de la préforme 15, et au surplus, de ne pas favoriser l'oxydation de la surface 30. Par exemple, pour une préforme multi-épaisseur d'un matériau composite à base de polyamide et d'une épaisseur maximale de 3,5 mm, grâce aux plaques chauffantes 34, 36, la préforme 15 est préchauffée à une température de 180 °C en 60 secondes.

Bien que la préforme 15 puisse présenter des parties de différentes épaisseurs, il n'est nul besoin d'avoir des plaques chauffantes 34, 36 en coopération de forme avec la préforme 15. Car en effet, les plaques chauffantes 34, 36 sont en contact avec les parties de plus grande épaisseur, et partant, favoriseront le préchauffage à cœur de ces parties, tandis que les parties de plus faibles épaisseur seront aisément portées en température à cœur ultérieurement, et plus particulièrement dans l'enceinte de chauffage 10.

Ainsi, après avoir été préchauffée, la préforme 15 est transférée à l'intérieur de l'enceinte de chauffage 10, afin d'être ramollie conformément aux dispositions indiquées ci-dessus. Bien que la température de la préforme 15 tende à décroître durant ce transfert, seules les surfaces sont concernées et le rayonnement infrarouge de l'enceinte de chauffage 10 permet de les réchauffer rapidement. À l'issue du passage à l'intérieur de l'enceinte de chauffage 10, la préforme 15 présente une température sensiblement supérieure à sa température de fusion et répartie de manière homogène dans toutes ses parties malgré les différences d'épaisseur éventuelles.

Ainsi par exemple, la préforme 15 est portée de 180 °C à 250 °C à l'intérieur de l'enceinte de chauffage 10 pendant une durée inférieure à 60 secondes. Le temps de présence à l'intérieur de l'enceinte de chauffage 10 est ainsi réduit puisqu'il s'agit d'apporter de l'énergie thermique pour que le matériau de la préforme 15 gagne quelques dizaines de degrés supplémentaires. Partant, on réduit le temps d'exposition du matériau au rayonnement infrarouge et par conséquent, plus encore, les risques d'oxydation de la surface.

La préforme 15 peut ensuite être transférée à l'intérieur du moule de formage 26. Ainsi, grâce à l'installation conforme à l'invention, on diminue les temps de cycle de thermoformage, par exemple pour une préforme multi-épaisseur d'un matériau composite à base de polyamide, d'une épaisseur maximale de 3,5 mm et d'une épaisseur minimale de 1 mm, le temps de cycle peut être de l'ordre de 60 secondes.

On observera que le procédé, conforme à l'invention, peut également être utilisé pour le formage des matériaux thermoplastiques en général.

## Revendications

1. Procédé de mise en forme de préforme en matériau thermoplastique, du type comprenant les étapes suivantes :
a) on fournit une préforme (15) en matériau thermoplastique présentant une surface (30) ;
b) on fournit de l'énergie thermique par rayonnement à ladite préforme (15) de manière à la rendre ductile ; et,
c) on met en forme ladite préforme (15) ductile à l'intérieur d'un moule de formage (26) ;
en ce qu'à l'étape a), on fournit un matériau composite thermoplastique,
et en ce qu'entre l'étape a) et l'étape b), on fournit en outre de l'énergie thermique à ladite préforme (15) par conduction, de manière à préchauffer ladite préforme,
en ce qu'on met en contact ladite préforme (15) avec des plaques chauffées (34, 36) pour fournir de l'énergie thermique par conduction à ladite préforme (15),
tandis qu'à l'étape b), on projette simultanément un fluide gazeux à la surface (30) de ladite préforme (15) pour préserver ladite surface;
**caractérise en ce que** la préforme est prise entre les plaques chauffées, dans un espace avec une présence d'air limitée, c'est-a-dire au moyen d'un tirage sous vide.

2. Procédé de mise en forme selon la revendication 1, **caractérisé en ce qu'**on projette ledit fluide gazeux selon une direction sensiblement perpendiculaire à la surface (30) de ladite préforme (15).

3. Procédé de mise en forme selon l'une quelconque des revendications 1 à 2. **caractérisé en ce qu'**à l'étape b), on fournit de l'énergie thermique par rayonnement infrarouge.

4. Procédé de mise en forme selon l'une quelconque des revendications 1 à 3, **caractérisé en ce qu'**à l'étape b), ledit fluide gazeux est de l'air.

5. Installation de mise en forme de préforme en matériau thermoplastique, comprenant, d'une part, une enceinte de chauffage (10) par rayonnement destinée à recevoir une préforme (15) en matériau thermoplastique de manière à pouvoir fournir de l'énergie thermique par rayonnement à ladite préforme (15) pour la rendre ductile, et d'autre part un moule de formage (26) situé en aval de ladite enceinte de chauffage (10) pour pouvoir mettre en forme ladite préforme ductile ;
en ce qu'elle comprend un dispositif de chauffage par conduction (32) situé en amont de ladite enceinte de chauffage par rayonnement (10) pour pouvoir fournir de l'énergie thermique à ladite préforme par conduction,
en ce que ledit dispositif de chauffage par conduction (32) comprend des plaques chauffées (34, 36) destinées à venir en contact avec ladite préforme (15) pour fournir de l'énergie thermique par conduction à ladite préforme ;
et en ce qu'elle comprend en outre un dispositif de projection d'un fluide gazeux (22) installé à l'intérieur de ladite enceinte de chauffage par rayonnement (10) pour pouvoir projeter ledit fluide gazeux à la surface (30) de ladite préforme (15), lorsque ladite préforme reçoit de l'énergie thermique par rayonnement, de manière à préserver la surface (30) de ladite préforme (15);
**caractérise en ce que** l'installation est adaptée pour prendre la préforme entre les plaques chauffées, dans un espace avec une présence d'air limitée, c'est-a-dire au moyen d'un tirage sous vide.

6. Installation de mise en forme selon la revendication 5, **caractérisée en ce que** ladite enceinte de chauffage par rayonnement (10) comprend des lampes à émission infrarouge.

## Patentansprüche

1. Verfahren zum Umformen eines Vorformlings aus thermoplastischem Material des Typs, der die folgenden Schritte umfasst:
a) Bereitstellen eines Vorformlings (15) aus thermoplastischem Material, der eine Oberfläche (30) aufweist;
b) Bereitstellen von Strahlungswärmeenergie für den Vorformling (15), so dass er formbar gemacht wird; und
c) Umformen des verformbaren Vorformlings (15) in einem Formwerkzeug (26);
wobei im Verfahrensschritt a) ein thermoplastisches Verbundmaterial bereitgestellt wird,
wobei zwischen dem Verfahrensschritt a) und dem Verfahrensschritt b) ferner Leitungswärmeenergie für den Vorformling (15) bereitgestellt wird, so dass der Vorformling vorgewärmt wird,
wobei der Vorformling (15) mit beheizten Platten (34, 36) in Kontakt gebracht wird, um dem Vorformling (15) Leitungswärmeenergie bereitzustellen, während im Verfahrensschritt b) gleichzeitig ein gasförmiges Medium auf die Oberfläche (30) des Vorformlings (15) geblasen wird, um die Oberfläche zu schützen; **dadurch gekennzeichnet, dass** der Vorformling zwischen den beheizten Platten in einem Raum mit begrenztem Luftvorkommen aufgenommen wird, das heißt mittels Vakuumziehen.

2. Verfahren zum Umformen nach Anspruch 1, **dadurch gekennzeichnet, dass** das gasförmige Medium in eine Richtung geblasen wird, die im Wesentlichen senkrecht zur Oberfläche (30) des Vorformlings (15) verläuft.

3. Verfahren zum Umformen nach einem der Ansprüche 1 bis 2, **dadurch gekennzeichnet, dass** im Verfahrensschritt b) Wärmeenergie durch Infrarotstrahlung bereitgestellt wird.

4. Verfahren zum Umformen nach einem der Ansprüche 1 bis 3, **dadurch gekennzeichnet, dass** das gasförmige Medium im Verfahrensschritt b) Luft ist.

5. Anlage zum Umformen eines Vorformlings aus thermoplastischem Material, umfassend zum einen eine Strahlungsheizkammer (10), die ausgestaltet ist, einen Vorformling (15) aus thermoplastischem Material aufzunehmen, so dass dem Vorformling (15) Strahlungswärmeenergie bereitgestellt werden kann, um ihn verformbar zu machen, und zum anderen der Heizkammer (10) nachgelagert ein Formwerkzeug (26), um den verformbaren Vorformling umformen zu können; wobei sie der Strahlungsheizkammer (10) vorgelagert eine Leitungsheizvorrichtung (32) umfasst, um dem Vorformling Leitungswärmeenergie bereitstellen zu können;
wobei die Leitungsheizvorrichtung (32) beheizte Platten (34, 36) umfasst, die ausgestaltet sind, mit dem Vorformling (15) in Kontakt zu kommen, um dem Vorformling Leitungswärmeenergie bereitzustellen;
und wobei sie ferner eine Blasvorrichtung für ein gasförmiges Medium (22) umfasst, die in der Strahlungsheizkammer (10) installiert ist, um das gasförmige Medium auf die Oberfläche (30) des Vorformlings (15) blasen zu können, wenn der Vorformling Strahlungswärmeenergie aufnimmt, so dass die Oberfläche (30) des Vorformlings geschützt wird;
**dadurch gekennzeichnet, dass** die Anlage dazu eingerichtet ist, den Vorformling zwischen den beheizten Platten in einem Raum mit begrenztem Luftvorkommen aufzunehmen, das heißt mittels Vakuumziehen.

6. Anlage zum Umformen nach Anspruch 5, **dadurch gekennzeichnet, dass** die Strahlungsheizkammer (10) im Infrarotbereich abstrahlende Lampen umfasst.

## Claims

1. A method for shaping a preform made of thermoplastic material, of the type comprising the following steps:
a) providing a preform (15) made of thermoplastic material having a surface (30) ;
b) providing thermal energy by radiation to said preform (15) so as to make it ductile; and,
c) shaping said ductile preform (15) within a forming mold (26) ;
wherein, at step a), it is provided a thermoplastic composite material,
and wherein, between step a) and step b), it is further provided thermal energy to said preform (15) by conduction, so as to preheat said preform,
wherein said preform (15) is brought in contact with heated plates (34, 36) to provide thermal energy by conduction to said preform (15), while at step b), simultaneously a gaseous fluid is projected on the surface (30) of said preform (15) to preserve said surface; **characterized in that** the preform is taken between the heated plates, in a space with a limited air presence, i.e., by means of a vacuum extraction.

2. The shaping method according to claim 1, **characterized in that** said gaseous fluid is projected following a direction substantially perpendicular to the surface (30) of said preform (15).

3. The shaping method according to any of claims 1 and 2, **characterized in that**, at step b), thermal energy is provided by infra-red radiation.

4. The shaping method according to any of claims 1 to 3, **characterized in that**, at step b), said gas fluid is air.

5. Installation for shaping a preform made of thermoplastic material, comprising, on the one hand, a radiation heating enclosure (10) intended to receive a thermoplastic material preform (15) so as to be able to provide thermal energy by radiation to said preform (15) to make it ductile and, on the other hand, a forming mold (26) located downstream from said heating enclosure (10) to be able to shape said ductile preform ;
wherein it comprises a conduction heating device (32) located upstream to said radiation heating enclosure (10) to be able to provide thermal energy to said preform by conduction ;
wherein said conduction heating device (32) comprises heated plates (34, 36) intended to contact said preform (15) to provide thermal energy to said preform by conduction ;
and wherein it further comprises a device intended to project a gaseous fluid (22) arranged within said radiation heating enclosure (10) to be able to project said gaseous fluid onto the surface (30) of said preform (15), when said preform receives thermal energy by radiation, so as to preserve the surface (30) of said preform (15); **characterized in that** the installation is adapted to take the preform between the heated plates, in a space with a limited presence of air, i.e. by means of a vacuum extraction.

6. Installation for shaping according to claim 5, **characterized in that** said radiation heating enclosure (10) comprises infra-red emission lamps.
